(19) Europäisches Patentamt
European Patent Office
Office européen des brevets

(11) Publication number: **0 107 784**
**B1**

(12) **EUROPEAN PATENT SPECIFICATION**

(45) Date of publication of patent specification: **29.04.87**

(51) Int. Cl.$^4$: **C 01 B 33/107**

(21) Application number: **83109441.2**

(22) Date of filing: **22.09.83**

(54) **Purification of chlorosilanes.**

(30) Priority: **29.09.82 US 427082**

(43) Date of publication of application:
**09.05.84 Bulletin 84/19**

(45) Publication of the grant of the patent:
**29.04.87 Bulletin 87/18**

(84) Designated Contracting States:
**DE FR GB IT**

(56) References cited:
**EP-A-0 054 650**
**GB-A- 893 495**
**US-A-2 877 097**
**US-A-3 071 444**
**US-A-3 414 603**
**US-A-3 540 861**
**US-A-4 112 057**

(73) Proprietor: **DOW CORNING CORPORATION**
**P.O. Box 1767**
**Midland Michigan 48640 (US)**

(72) Inventor: **Doornbos, Richard Steven**
**511 Coolidge**
**Midland Michigan 48640 (US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The production of polycrystalline silicon for use in semiconductor devices is normally effected by the hydrogen reduction of various chlorosilanes at elevated temperatures. Because of the stringent impurity limitations for semiconductor silicon, the starting materials should be of the highest possible purity. Boron impurities in semiconductor silicon are generally the most troublesome since boron in silicon has a distribution coefficient approaching unity and, therefore, cannot normally be removed from silicon metal by conventional zone-refining techniques. Unfortunately, the boron-containing impurities are also difficult to remove from chlorosilanes.

There have been numerous attempts in the art to purify chlorosilanes in order to produce better quality semiconductor silicon. These purification techniques include, for example, repetition distillation, water treatment (see for example U.S. Patent 3,540,861 issued November 17, 1970), and the use of adsorbents to remove the boron-containing and, possibly, other impurities. U.S. Patent 4,112,057 (issued September 5, 1978) teaches that chlorosilanes contaminated by boron-containing impurities can be purified by treatment of the liquid chlorosilane with an effective amount of a hydrated metal oxide or a hydrated silicate containing 3 to 8% by weight water and then distilling the treated chlorosilane at a temperature of about 3 to 15°C above its boiling point at atmospheric pressure. Water is required to be added periodically to the adsorbent of U.S. Patent 4,112,057 to keep the water content in the 3—8% range. Silica was employed as the adsorbent in this process but only liquid phase adsorption was disclosed in Patent 4,112,057.

U.S. Patent 3,071,444 (issued January 1, 1963) teaches that chlorosilanes can be purified by passage of the liquid chlorosilane through a bed of various adsorbents including silica. For the silica to be effective, however, it was necessary to preactivate the material at about 270°C or more in air for extended periods of time. Additionally, long contact times between the chlorosilane and the adsorbent were used. Patent 3,071,444 did not disclose the purification of chlorosilanes by passage of the chlorosilane in the vapor phase through any of the disclosed adsorbents.

Adsorption techniques employing ion-exchange resins have also been used to purify chlorosilanes (U.S. Patent 2,877,097 issued March 10, 1959) as well as organochlorosilanes (U.S. Patent 3,414,603 issued December 3, 1968). Both patents teach that adsorption of impurities (including boron) from the chlorosilanes by passage through ion-exchange resins was independent of the state (liquid or vapor phase) of the chlorosilanes. In other words, U.S. Patents 2,877,097 and 3,414,603 teach that liquid phase adsorption and vapor phase adsorption of impurities from various chlorosilanes using ion-exchange resins are equivalent processes.

One object of this present invention is to provide a process by which chlorosilanes can be more easily purified. Another object is to provide a process by which boron-containing impurities can be more easily removed from chlorosilanes. Still another object is to provide a process for providing trichlorosilane, substantially free of boron-containing impurities, which is suitable for use in the production of semiconductor silicon. Still other objects of the present invention will be apparent to those skilled in the art upon consideration of this specification.

This invention relates to a process for the purification of a chlorosilane selected from the group consisting of monochlorosilane, dichlorosilane, trichlorosilane, and tetrachlorosilane where said chlorosilane is contaminated with boron-containing impurities by passing the chlorosilane through a bed of silica and collecting the purified chlorosilane having a significantly reduced amount of boron-containing impurities, said process is characterized by passing the chlorosilane, in the vapor phase, through a bed of silica, said bed of silica being at a temperature greater than 3°C above the boiling point of the chlorosilane at the operating pressure and said silica containing more than about 0.25% by weight total hydroxyl and has a surface area greater than 100 $m^2/g$.

This invention relates to a process for the removal of boron-containing impurities from various chlorosilanes thereby rendering the chlorosilanes more suitable for the production of semiconductor silicon by the various known reduction techniques (especially the hydrogen reduction technique). The chlorosilane suitable for purification by this process include chlorosilanes of the general formula

$$Cl_nSiH_{4-n}$$

where $n$ is 1, 2, 3, or 4. More specifically, these chlorosilanes include monochlorosilane, dichlorosilane, trichlorosilane, and tetrachlorosilane. Dichlorosilane and trichlorosilane are preferred species for the practice of this invention. Trichlorosilane produced in the so-called "direct process" reaction of silicon metal and hydrogen chloride is a particularly preferred species for the practice of this invention.

The process of this invention is carried out by passing the vaporous chlorosilane through a bed of silica, preferably a fixed bed of silica in an adsorption column or tower, where a significant amount of the boron-containing impurities are removed from the chlorosilane and then collecting the purified chlorosilane. In order to gain the advantages of this process, the chlorosilane must be in the vapor state during the contact with the silica. The advantages of this process over the purification techniques of the prior art include, among others, improved capacity of the silica for removing the boron impurities, improved efficiency for boron removal, and decreased contact time between the silica and chlorosilane for boron removal. These advantages will be delineated in more detail in the examples.

The temperature of the silica bed must be such that the chlorosilane remains in the vapor phase. Therefore, the temperature of the silica gel bed should be above about 3°C above the boiling point of the chlorosilane at the operating pressure of the silica bed. It has been found that the adsorption capacity and efficiency of the silica bed decreases when the temperature of the bed goes above about 85°C. Therefore, it is preferred that the temperature of the silica bed remain below about 85°C in order to obtain the maximum purification. When trichlorosilane is purified by the procedures of this invention, it is especially preferred that the adsorption bed temperature is between about 50—75°C.

The pressure of the adsorption column is not critical. However, as one skilled in the art understands, if one wishes to operate within the preferred temperature ranges, the pressure should not be so excessive that it is not possible to meet the temperature limitations described above. In other words, if one wishes to operate the silica bed in the preferred temperature range of greater than 3°C above the boiling point of chlorosilane and below about 85°C then the pressure of the adsorption column should be below that pressure required to raise the boiling point of the chlorosilane to be purified to a temperature of about 82°C. Otherwise, the pressure can be atmospheric or below or above atmospheric.

Types of silica useful in this invention includes silica gel, silica powder, fumed silica, amorphous silica, and precipitated silica. The silicas that have been employed in the practice of this invention were used as received from the manufacturer or supplier. The free water content of the silica was determined by weight loss at 105°C for three hours in a forced air convection oven. The silicas tested had a free water content from about 0 to 6% by weight. The total hydroxyl content of the silica was determined by titration with lithium aluminum di-n-butylamide. This titration procedure is described in detail in *Analysis of Silicones*, A. L. Smith (Ed.), John Wiley and Sons (1974), New York, pages 139—142. This procedure determines both the water content and ≡SiOH surface groups on the silica. The silica was not dried prior to the total hydroxyl determination. The total hydroxyl content was found to be in the range of about 1 to 3% (by weight) by the lithium aluminum di-n-butylamide titration for the samples tested. Performance of the vapor phase adsorption process for boron removal from chlorosilanes does appear to vary with total hydroxyl content of the silica. Except with the very low total hydroxyl containing silicas this performance variation is small. It is expected that silica containing less than about 0.25% by weight total hydroxyl would not be suitable for use in this invention. It is preferred that the silica contain at least 1.0% total hydroxyl for best performance. As one skilled in the art would know, there is a maximum limit on the free water content of the silica employed in this invention. This maximum limit results because of the possibility of hydrolysis of the chlorosilane. With excessive hydrolysis, caused by excessive water in the silica, the adsorption column may become plugged thereby restricting vapor flow through the column and causing an excessive pressure drop through the column. The use of such "wet" silicas should be avoided to obtain the maximum usefulness of this invention. Column plugging has not been observed in any of the experiments performed using the vapor phase adsorption technique to date. However, it is estimated that the free water content should be below about 10% by weight to minimize potential column plugging problems.

The silica's particle size and particle size distribution are also variables. The best silicas that have been examined to date have a particle size of 74—630 µm with a particle size distribution such that about 35—65% of the particles of are retained on a 225 µm screen. As the particle size decreases, the pressure drop across the silica fixed bed increases. Silica bed columns with high pressure drops do work in the practice of this invention but require higher capital investment due to the larger pumps and other equipment required to overcome the pressure drop. With larger particle size silicas, a decrease in efficiencies and capacities for purifying chlorosilanes is expected. For example, a silica with a particle size of 630—1680 µm gave poorer results than did a 74—630 µm material. The 630—1680 µm material had a capacity of about 500 g $HSiCl_3$/g $SiO_2$ and removed only about 63% of the boron as opposed to a capacity of 1500—2000 g $HSiCl_3$/g $SiO_2$ and removal of about 90% of the boron with the 74—630 µm silica. However, the performance of the larger particle size material is still superior in the vapor phase adsorption as compared to the liquid phase system.

All the silicas tested had large surface areas. It is estimated that silicas with surface areas greater than 100 $m^2$/g would be suitable for the practice of this invention. However, silicas with surface areas greater than 500 $m^2$/g are preferred.

The process of this invention is carried out by passing vaporous chlorosilanes through silica and collecting the purified chlorosilane effluent. Passage of the chlorosilane through silica results in an effluent which contains a significantly reduced amount of boron-containing impurities as compared to the crude chlorosilane feed. The meaning of "significantly reduced amount" is dependent on the boron content of the chlorosilane feed. When the chlorosilane feed contains more than about 500 ppba (parts per billion atomic) boron, a "significantly reduced amount" is understood to mean that at least 75% of the boron-containing impurities are removed from the chlorosilane feed. When the chlorosilane feed contains between 50 and 500 ppba boron a "significantly reduced amount" is understood to mean that at least 50% of the boron-containing impurities are removed from the chlorosilane feed. When the chlorosilane feed contains less than 50 ppba boron, a "significantly reduced amount" is understood to mean that at least 25%

of the boron-containing impurities are removed from the chlorosilane feed by the practice of this invention. In most cases, more than 90% of the boron-containing impurities are removed from the crude chlorosilane feed by passage of the vapor through suitable silica adsorption columns. The effluent streams of purified chlorosilanes usually contain less than 100 ppba boron and in many cases less than 50 ppba boron. The capacity of most of the silicas examined in the process of this invention was in the range of 1500—2000 kg $HSiCl_3$/kg $SiO_2$. As the capacity of a silica column is approached, the boron content in the effluent increases. When the boron content of the effluent reaches about 150 ppba boron, the column is said to have reached the boron "breakthrough" level and is considered to be nearly exhausted. If more chlorosilane is passed through the column after "breakthrough" has been reached, the boron content of the effluent will rapidly rise to high levels which will approach the level of boron in the feed chlorosilane. Naturally, this definition of "breakthrough" does not apply if one is attempting to purify a chlorosilane containing less than 150 ppba boron.

The process of this invention can be used alone to remove boron-containing impurities from chlorosilanes. The process can be run in a continuous, semi-continuous or batch mode as desired. This purification method can also be used in combination with other chlorosilane purification processes. For example, the process of this invention could be employed along with a repetitive distillation procedure of the prior art. The vapor phase adsorption column could be placed before the initial distillation column, between distillation columns, or after the final distillation column. The vapor phase adsorption technique could also be used in combination with water treatment with or without additional distillations. More than one silica column could be used in such purification processes. Indeed, one of the advantages of the process of this invention is the ease that it can be introduced into an existing chlorosilane purification process. One advantage of combining the instant process with other processes to purify chlorosilanes is that process upsets in any one part of the system are less likely to result in chlorosilanes which cannot be used directly for polycrystalline silicon production. Upsets could occur in the vapor adsorption process (for example, a premature boron "breakthrough") or in the other part of the combined process. An additional advantage of combining the instant purification process with other purification processes is an improvement in the purified chlorosilane's quality. Again, this combined purification system can be operated in a continuous, semi-continuous or batch mode.

The following examples are to illustrate the invention and are not to be regarded as limiting. Examples 1—5 and Comparative Examples 1—3 were conducted in small, laboratory scale equipment. Examples 6 and 7 demonstrate the practice of this invention using much larger scale equipment. In the examples, the boron content of effluent chlorosilane was determined using the following analytical procedure. The analytical apparatus was constructed entirely of Teflon to minimize sample contamination and exposure of the samples to air. The analytical apparatus consisted of a sample container for the effluent to be tested which had an argon inlet tube and a dip tube extending very close to the bottom of the sample container. The upper portion of the dip tube was connected to a receiver in such a manner that, with a liquid chlorosilane sample in the sample container, when the system was pressurized with argon the chlorosilane would flow up the dip tube, enter the top of an adsorbent filled column, pass through the column, and exit to the receiver. The adsorbent column contained amorphous silica (Cabosil S-17, from Cabot Corporation, Boston, Mass.) especially selected for its low level of boron. The silica was first treated with hydrogen fluoride by passing argon over about 100 mg of a Ultrex 48% HF aqueous solution (from J. T. Baker, Phillipsburg, N.J.) and then through the column (containing about 75 mg silica). The argon, containing HF vapor, was passed through the silica at a rate of 75—150 ml/min for 45 minutes. After purging with argon, the fluorinated column contained approximately 0.5% fluorine. For the actual analysis, the effluent chlorosilane was placed in the sample container. The sample container was pressurized with welding grade argon to provide a liquid elution rate of about 50 ml of chlorosilane per hour through the fluorinated amorphous silica column. After elution was complete, argon was allowed to flow through the analytical column at a rate of about 75—150 ml/hr for about 45 minutes. The concentration of boron adsorbed on the analytical column was then determined by Atomic Emission Spectrography. The analytical column was, in effect, employed to concentrate the boron-containing impurities present in the effluent. Therefore, boron detection limits depend for the most part on the amount of effluent passed through the analytical column. The amount of boron in the effluent was determined by the following calculation:

$$\frac{\text{Concentration of Boron in Column (ppm)} \times \text{Column Wt} \times \text{F}}{\text{Sample Wt}}$$

where "concentration of boron in column (ppm)" is the concentration (in parts per million) of boron adsorbed on the analytical column, "column wt" is the weight of material in the analytical column, "sample wt" is the weight of effluent chlorosilane passed through the analytical column, and "F" is a factor to convert ppm (by weight) to the desired ppba (part per billion atomic) boron. For trichlorosilane, *F* approximately equals (1000 (135.5))/10.8 where 135.5 is the molecular weight of trichlorosilane and 10.8 is the atomic weight of boron.

In Comparative Examples 1—3, the analytical

column was actually incorporated directly into the experimental system. In these examples, the liquid chlorosilane passed first through the test columns and then directly into the analytical column. The analytical column was removed periodically to determine the boron content of the effluent.

Example 1

This example shows the vapor phase adsorption of boron-containing impurities from trichlorosilane. The trichlorosilane employed contained about 7900 ppba boron. The silica employed was from Davidson Chemical Div., W. R. Grace and Co., Baltimore, Md. The Grade 12 silica had a free water content of about 4%, a particle size of 74—630 µm, a bulk density of about 737 kg/$m^3$, a surface area of about 720—760 $m^2$/g, and a pore volume of about 0.4 $cm^3$/g. The particle size distribution of the silica was as follows: 6% retained on a 630 µm screen, 50% retained on a 225 µm screen, 85% retained on a 98 µm screen, and 94% retained on a 74 µm screen. Except for the water content, all data on the silica was supplied by the vendor.

The apparatus employed was constructed of stainless steel except for the collection bottle which was Teflon. The chlorosilane contaminated with boron impurities was loaded into a feed tank under a nitrogen atmosphere. The flow rate of the chlorosilane through the system was controlled by varying the nitrogen pressure above the chlorosilane liquid in the feed tank. The liquid chlorosilane, upon leaving the feed tank, passed through a rotameter where the flow rate of the liquid chlorosilane was monitored. After the rotameter, the liquid chlorosilane is passed into a coiled vaporizer heated with steam at a pressure of about 690 mbar. Sufficient steam is used in the vaporizer to insure that all the chlorosilane is vaporized. The chlorosilane vapor is then passed into the test column containing the silica adsorbent. The line between the vaporizer and the test column and the test column itself are heat traced and carefully kept at a specified temperature above the boiling point of the chlorosilane. After passage through the test column, the chlorosilane vapor was condensed at dry ice temperature and collected in a Teflon container also cooled with dry ice. The material collected was then analyzed for boron content. Generally, several chlorosilane samples were collected through the course of a run and analyzed for boron for the evaluation of a given silica.

In a blank experiment, trichlorosilane containing about 7900 ppba boron was passed through this system in the absence of an adsorbent material in the test column. The temperature of the test column was 50°C. The collected trichlorosilane was found to have about 3600 ppba boron.

Davidson Grade 12 silica (456 mg) was placed in the test column. The fixed bed of silica was about 2.54 cm thick. Trichlorosilane containing about 7900 ppba boron was fed to the vaporizer at a liquid flow rate of about 1.34 g/min. Vapor trichlorosilane passed through the test column at a rate of about 8.23 m/min with a residence time of about 0.2 sec. The temperature of the test column was 50°C. The pressure drop across the bed was about 980 mbar. A total of 482 g trichlorosilane vapor was passed through the silica fixed bed. Boron was not detected in any of the effluent (detection limit was based on the $HSiCl_3$ sample size and was about 60 ppba). The capacity of this silica column was greater than 1060 g $HSiCl_3$/g $SiO_2$. Greater than 99.2% of the boron was removed by passage through the column. Boron "breakthrough" was not observed.

A comparison of the blank experiment and the experiment containing Grade 12 silica clearly shows that the reduction of boron impurities noted here and elsewhere in the examples is due to the silica rather than the mere vaporization and condensing of the chlorosilane.

Example 2

This example also shows the vapor phase adsorption of boron impurities from trichlorosilane. The apparatus described in Example 1 was employed. The trichlorosilane feed (containing about 7900 ppba boron) and the silica (Davidson Grade 12) used were the same as used in Example 1. About 785 mg of silica was placed in the test column. Trichlorosilane (397 g) was then passed through the system at a liquid flow rate of 0.36 $cm^3$/min resulting in a vapor residence time of about 0.9 sec in the silica fixed bed. The temperature of the fixed bed was 50°C. The pressure drop across the fixed bed was about 980 mbar. Boron was not detected in the effluent (detection limit about 30 ppba). The capacity of the silica for trichlorosilane purification was greater than 506 g $HSiCl_3$/g $SiO_2$ and boron removal was greater than 99.6%. Boron "breakthrough" was not observed.

Example 3

Using the same system and similar materials as described in Example 1, trichlorosilane containing 3500 ppba boron was purified by vapor phase adsorption at 50°C using Davidson Grade 12 silica. The test column contained 466 mg $SiO_2$. The vapor residence time in the column was 0.2 sec. After a total of 944 g $HSiCl_3$ was purified, the effluent still had an undetectable amount (less than 50 ppba) of boron. The capacity of this silica was greater than 2025 g $HSiCl_3$/g $SiO_2$ with boron removal at greater than 98.6%.

Comparative Example 1

This example shows the liquid phase adsorption of boron impurities from trichlorosilane using a Davidson Grade 12 silica. The free water content of the silica was about 4%. The apparatus was constructed of stainless steel and Teflon. The chlorosilane was loaded into a feed tank connected to a nitrogen line. By variation of the nitrogen pressure, the chlorosilane flow rate was controlled. From the feed tank, the chlorosilane

passed into three Teflon test columns (6.35 mm ID by 50.8 mm long) mounted in series which contained the silica to be tested. After passage of the chlorosilane through the test columns, it flowed through an analytical column and then into a product recovery container. The analytical column contained about 100 mg of HF treated Cabosil S-17 amorphous silica. The analytical column was removed frequently to analyze for the boron content of the effluent. A new analytical column was used after each boron analysis.

The trichlorosilane feed contained 7650 ppba boron. Each test column contained about 1 g silica for a total of 3.19 g silica. The system operated at ambient temperature (about 22°C). After passage of 662 g $HSiCl_3$ through the system, the boron content of the effluent was still below the detection limit (*ca.* 90 ppba). The passage of an additional 189 g $HSiCl_3$ resulted in an effluent containing 126 ppba boron. A further 214 g of $HSiCl_3$ resulted in an effluent with 740 ppba boron level. The "breakthrough" capacity of this silica in the liquid phase adsorption study was about 270—330 g $HSiCl_3$/g $SiO_2$ with more than 98.8% of the boron removed prior to "breakthrough".

A comparison of Example 1, 2, and 3 with Comparative Example 1 clearly shows the superior performance obtained with vapor phase adsorption.

Example 4

This example demonstrates the purification of a relatively pure sample of trichlorosilane using vapor phase adsorption with a silica fixed bed. The apparatus used is described in Example 1. The feed trichlorosilane contained 410 ppba boron. The silica (466 mg) was Davidson Grade 12. The temperature of the column was 50°C. The vapor velocity in the silica column was about 8.23 m/min. The pressure drop across the fixed bed was about 980 mbar. After passage of 590 g $HSiCl_3$ through the column, the effluent had an undetectable boron level. The detection limit was *ca.* 40 ppba. The capacity of the silica for boron removal from the relatively pure trichlorosilane was greater than 1266 g $HSiCl_3$/g $SiO_2$. More than 90% of the boron impurities were removed.

Comparative Example 2

This example demonstrates the attempted purification of a relatively pure sample of trichlorosilane using liquid phase adsorption with a silica fixed bed. The trichlorosilane sample contained 455 ppba boron. The silica (2.99 g) was Davidson Grade 12. The flow rate of trichlorosilane through the system was about 1 $cm^3$/min. The temperature of the system was about 22°C. The first boron determination was taken after passage of 402 g $HSiCl_3$ through the fixed bed. The effluent contained 187 ppba boron. Therefore, the capacity of the liquid phase adsorption system for purification of relatively pure $HSiCl_3$ was less than 134 g $HSiCl_3$/g $SiO_2$ with only about 60% boron removal.

A comparison of Example 4 and Comparative Example 2 clearly shows the superiority of the vapor phase adsorption technique.

Example 5

This Example shows the purification of trichlorosilane by the vapor phase adsorption procedure using a different silica as the adsorbent. The silica employed was Sipernat 22 (from Degussa Corp., Teterboro, N.J.) with a surface area of about 190 $m^2$/g, an average particle size of 18 µm, a bulk density of about 200 g/l, and a free water content when shipped from the manufacturer of about 6%. The apparatus and procedures described in Example 1 were employed. Silica (300 mg) was loaded into the test column. The temperature of the test column was 50°C. The crude trichlorosilane contained 5700 ppba boron. The vapor flow through the test column was 3.96 m/min. The vapor residence time in the column was about 0.8 sec. After passage of 299 g $HSiCl_3$ through the column, the resulting effluent contained 56 ppba boron. Another 170 g of $HSiCl_3$ vapor was passed through the column with the effluent containing 49 ppba boron. The pressure drop across the column (about 5.08 cm long) was about 1162 mbar/cm. The capacity of the adsorbent was greater than 1560 g $HSiCl_3$/g $SiO_2$ with about 99.1% of the boron removed.

In a similar experiment, a fresh sample of Degussa Sipernat 22 silica (265 mg) was employed under the same experimental conditions as above except that the vapor residence time in the silica column was increased to about 1.3 sec. After passage of about 290 g of the same crude trichlorosilane (5700 ppba boron), the effluent contained no detectable boron (less than 30 ppba). The capacity of this silica for boron removal was greater than 1094 g $HSiCl_3$/g $SiO_2$ with about 99.5% of the boron removed. The pressure drop across the column was about 1048 mbar/cm.

Comparative Example 3

This example shows the purification of trichlorosilane by liquid phase adsorption using Degussa Sipernat 22 silica. The procedures and apparatus employed were the same as described in Comparative Example 1. The silica (245 mg) is described in Example 5. Liquid trichlorosilane (8024 ppba boron) was passed through the silica column at a rate of about 1.2 $cm^3$/min and ambient temperature (22°C). The effluent, after passage of 166 g of trichlorosilane, contained 517 ppba boron. The capacity of the silica column was less than 678 g $HSiCl_3$/g $SiO_2$ with about 94% boron removal.

An inspection of Example 5 and Comparative Example 3 clearly shows the superiority of the vapor phase adsorption over liquid phase adsorption using Degussa Sipernat 22 silica as the adsorbent.

Examples 6 and 7 demonstrate the practice of this invention on a "mini-plant" scale. Liquid trichlorosilane was fed into the system through a rotameter. From the rotameter, the liquid trichlorosilane passed into the vaporizer. The

vaporizer, constructed of carbon steel, consisted of a jacket of about 10.2 cm diameter and 61 cm length containing about 7.92 m of stainless steel line in a coiled configuration. Through the coiled line passed 2.07 bar steam resulting in the vaporizer being operated at about 120°C. The trichlorosilane vapor was then transported to the fixed bed adsorption unit through heat traced (about 70°C) carbon steel lines. The fixed bed adsorption unit was constructed of carbon steel with a length of 30.48 cm and a diameter of 7.62 cm. Three 350 watt tubular heaters were mounted on the outside of the adsorption unit. The silica was contained in the adsorption unit by means of a 44 µm stainless steel screen mounted on a support plate. From the adsorption unit, the vaporous trichlorosilane was passed into a sample cooler which was cooled with service water (about 25°C). The condensed trichlorosilane was then collected.

Example 6

This example shows the effect of temperature on the adsorption process using the "mini-plant" system just described. Davidson Grade 12 silica containing 2% by weight free water and 3.0% total hydroxyl was employed. In each run the adsorption unit was loaded with 1.02 kg silica. The crude trichlorosilane contained about 8000 ppba boron. The flow rate of trichlorosilane through the system was 15.9 kg/hr. The pressure drop across the fixed bed in the range of 1118—1256 mbar for all runs. In Run 1 the adsorption unit was at an average temperature of 85°C with a temperature range of 73—99°C. In Run 2, the average temperature of the silica gel bed was 74°C with a range of 63—85°C. In Run 3, the average temperature was 62°C with a temperature range of 59—64°C. In Run 1, after passage of 400 kg $HSiCl_3$/kg $SiO_2$ the effluent contained 380 ppba boron. Therefore, at an average temperature of 85°C, the capacity of the fixed bed was less than 400 kg $HSiCl_3$/kg $SiO_2$ with boron removal at about 95%. In Run 2, after passage of 400 kg $HSiCl_3$/kg $SiO_2$ the effluent contained 15 ppba boron; after 1485 kg $HSiCl_3$/kg $SiO_2$ the effluent contained 85 ppba boron; and after treating 1950 kg $HSiCl_3$/kg $SiO_2$ the effluent contained 3000 ppba boron. Therefore, at an operating temperature of about 74°C the capacity of the silica for purifying trichlorosilane was between 1485 and 1950 kg $HSiCl_3$/kg $SiO_2$ with about 98.9% boron removal. In Run 3, after passage of 500 kg $HSiCl_3$/kg $SiO_2$ through the silica bed, the effluent contained less than 15 ppba boron; after 1000 kg $HSiCl_3$/kg $SiO_2$, 15 ppba boron; and after 1530 kg $HSiCl_3$/kg $SiO_2$ was passed through the silica fixed bed, the effluent contained only 60 ppba. Therefore, at a temperature of about 62°C the silica capacity for boron adsorption was greater than 1500 kg $HSiCl_3$/kg $SiO_2$ with about 99.2% of the boron removed.

Based on these results, it is preferred that the temperature of the fixed bed adsorption unit remain below an average temperature of about 85°C in order to obtain maximum capacities and efficiencies in boron removal from trichlorosilane.

Example 7

This example shows the quality of polycrystalline silicon that can be produced from trichlorosilane purified by the procedures of this invention. The "mini-plant" vapor phase adsorption system was employed. In Run 1, 1.02 kg of Davidson Grade 12 silica (as employed in Example 6) was used in the fixed bed. The adsorption unit was kept at an average temperature of 70°C (range: 66—75°C). Trichlorosilane containing about 2700 ppba boron was passed through the fixed bed at a flow rate of 15.9 kg/hr. The pressure drop through the bed was 1256 mbar. At a capacity of 1440 kg $HSiCl_3$/kg $SiO_2$, the effluent contained no detectable boron (detection limit was 14 ppba boron). Polycrystalline silicon, prepared by standard hydrogen reduction techniques using the effluent trichlorosilane without any additional purification, contained 0.20 ppba boron. One skilled in the art would know that polycrystalline silicon prepared from the crude trichlorosilane used in Run 1 without any purification would probably contain in excess of 1000 ppba boron.

In Run 2, 1.02 kg of a different lot of Davidson Grade 12 silica was employed in the adsorption unit. This silica contained nil free water and about 1.0% total hydroxyl. The crude trichlorosilane contained about 100 ppba boron and was passed through the fixed silica bed at a temperature of between 63 and 71°C and at a flow rate of 15.44 kg/hr. The capacity of this silica was greater than 1080 kg $HSiCl_3$/g $SiO_2$ with boron at less than 20 ppba in the effluent. Polycrystalline silicon prepared from this effluent (with no further purification) contained 0.03 ppba boron. It is estimated that polycrystalline silicon prepared from trichlorosilane with 100 ppba boron would have contained 10—20 ppba or more boron.

**Claims**

1. A process for purification of a chlorosilane selected from the group consisting of monochlorosilane, dichlorosilane, trichlorosilane, and tetrachlorosilane where said chlorosilane is contaminated with boron-containing impurities, by passing the chlorosilane through a bed of silica and collecting the purified chlorosilane having a significantly reduced amount of the boron-containing impurities, said process is characterized by passing the chlorosilane, in the vapor phase, through a bed of silica, said bed of silica being at a temperature greater than 3°C above the boiling point of the chlorosilane at the operating pressure and said silica containing more than about 0.25% by weight total hydroxyl and has a surface area greater than 100 $m^2$/g.

2. A process as defined in Claim 1, wherein the silica contains more than about 1.0% total hydroxyl and wherein the temperature of the bed of silica is less than 85°C.

3. A process as defined in Claim 1, wherein the chlorosilane, in the vapor phase, is passed through a fixed bed of silica in an adsorption column.

4. A process as defined in Claim 3, wherein the temperature of the fixed bed of silica is between 50°C and 75°C.

5. A process for the purification of trichlorosilane where said trichlorosilane is contaminated with boron-containing impurities, by passing the trichlorosilane through a bed of silica and collecting the purified trichlorosilane, said process is characterized by passing the trichlorosilane, in the vapor phase, through a bed of silica, said bed of silica being at a temperature greater than 3°C above the boiling point of trichlorosilane at the operating pressure and at a temperature of less than 85°C, said silica containing more than about 0.25% by weight total hydroxyl, said silica has a surface area greater than about 500 $m^2/g$, and said silica has a particle size distribution such that about 35—65% of the particles are retained on a 225 μm screen.

6. A process as defined in Claim 5, wherein the temperature of the silica bed is between 50°C and 75°C and wherein the silica contains more than about 1.0% total hydroxyl.

**Patentansprüche**

1. Verfahren zur Reinigung von einem Chlorsilan aus der Gruppe bestehend aus Monochlorsilan, Dichlorsilan, Trichlorsilan und Tetrachlorsilan, das Bor enthaltende Verunreinigungen aufweist, durch Hindurchleiten des Chlorsilans durch ein Bett aus Kieselsäure und Gewinnen eines gereinigten Chlorsilans, das einen wesentlich verringerten Gehalt an Bor enthaltenden Verunreinigungen aufweist, gekennzeichnet durch Hindurchleiten des Chlorsilans in der Dampfphase durch ein Bett aus Kieselsäure, wobei sich das Kieselsäurebett auf einer Temperatur befindet, die 30°C über dem Siedepunkt der Chlorsilane bei Arbeitsdruck liegt und die Kieselsäure mehr als etwa 0,25 Gew.% Gesamthydroxyl enthält und eine Oberfläche von mehr als 100 $m^2/g$ aufweist.

2. Verfahren nach Anspruch 1, dadurch gekennzeichnet, daß die Kieselsäure mehr als etwa 1 % Gesamthydroxyl enthält und die Temperatur des Kieselsäurebettes unter 85°C liegt.

3. Verfahren nach Anspruch 1, dadurch gekennzeichnet, daß das Chlorsilan in der Dampfphase durch ein Kieselsäurefestbett in einer Adsorptionskolonne geleitet wird.

4. Verfahren nach Anspruch 3, dadurch gekennzeichnet, daß die Temperatur des Kieselsäurefestbettes zwischen 50°C und 75°C beträgt.

5. Verfahren zur Reinigung von mit Bor enthaltenden Verunreinigungen verunreinigtem Trichlorsilan durch Hindurchleiten des Trichlorsilans durch ein Bett aus Kieselsäure und Gewinnen des gereinigten Trichlorsilans, gekennzeichnet durch Hindurchleiten des Trichlorsilans in der Dampfphase durch ein Bett aus Kieselsäure, wobei sich das Kieselsäurebett auf einer Temperatur befindet, die 3°C über dem Siedepunkt von Trichlorsilan beim Arbeitsdruck liegt und unter 85°C beträgt und die Kieselsäure mehr als etwa 0,25 Gew.% Gesamthydroxyl enthält und eine Oberfläche von mehr als etwa 500 $m^2/g$ aufweist und die Kieselsäure eine Teilchengrößeverteilung aufweist, so daß etwa 35—65% der Teilchen auf einem Sieb mit Maschenweite 225 μm verbleiben.

6. Verfahren nach Anspruch 5, dadurch gekennzeichnet, daß die Temperatur des Kieselsäurebettes zwischen 50°C und 75°C beträgt und die Kieselsäure mehr als etwa 1 % Gesamthydroxyl enthält.

**Revendications**

1. Un procédé pour la purification d'un chlorosilane choisi dans le groupe formé par le monochlorosilane, le dichlorosilane, le trichlorosilane et le tétrachlorosilane, ledit chlorosilane étant contaminé par des impuretés contenant du bore, dans lequel on fait passer le chlorosilane à travers un lit de silice et on recueille le chlorosilane purifié dont la teneur en impuretés contenant du bore est fortement réduite, ledit procédé étant caractérisé en ce qu'on fait passer le chlorosilane, en phase vapeur, à travers un lit de silice, ce lit de silice étant à une température supérieure de plus de 3°C au point d'ébullition de chlorosilane à la pression opératoire et ladite silice contenant plus d'environ 0,25 % en poids de groupes hydroxyle totaux et ayant une surface spécifique supérieure à 100 $m^2/g$.

2. Un procédé comme défini dans la revendication 1, dans lequel la silice contient plus d'environ 1,0 % de groupes hydroxyle totaux et dans lequel la température du lit de silice est inférieure à 85°C.

3. Un procédé comme défini dans la revendication 1, dans lequel le chlorosilane, en phase vapeur, est passé à travers un lit fixe de silice contenu dans une colonne d'adsorption.

4. Un procédé comme défini dans la revendication 3, dans lequel le température du lit fixe de silice est comprise entre 50°C et 75°C.

5. Un procédé pour la purification de trichlorosilane, ce trichlorosilane étant contaminé par des impuretés contenant du bore, dans lequel on fait passer le trichlorosilane à travers un lit de silice et on recueille le trichlorosilane purifié, ledit procédé étant caractérisé en ce qu'on fait passer le trichlorosilane, en phase vapeur, à travers un lit de silice, ce lit de silice étant à une température de plus de 3°C au point d'ébullition du trichlorosilane à la pression opératoire et à une température inférieure à 85°C, ladite silice contenant plus d'environ 0,25% en poids de groupes hydroxyle totaux, ladite silice ayant une surface spécifique supérieure à 500 $m^2/g$, et ladite silice ayant une distribution granulométrique telle qu'environ 35—65 % des particules sont retenues sur un tamis de 225 μm.

6. Un procédé comme défini dans la revendication 5, dans lequel la température du lit de silice est comprise entre 50°C et 75°C et dans lequel la silice contient plus d'environ 1,0 % de groupes hydroxyle totaux.